(19) Europäisches Patentamt
European Patent Office
Office européen des brevets

(11) **EP 3 754 570 A1**

(12) **EUROPEAN PATENT APPLICATION**

(43) Date of publication:
**23.12.2020 Bulletin 2020/52**

(51) Int Cl.:
***G06Q 10/06*** *(2012.01)* ***G06Q 50/12*** *(2012.01)*

(21) Application number: **19180731.2**

(22) Date of filing: **18.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **XIAO, Weimin**
  **5656 AE Eindhoven (NL)**
• **BAO, Weishun**
  **5656 AE Eindhoven (NL)**
• **CHEN, Yun**
  **5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **AN APPARATUS AND METHOD FOR DETERMINING COOKING ABILITY INDEX**

(57) There is provided a computer-implemented method for determining a cooking ability index of a user. The method comprises acquiring (202) a plurality of recipes; receiving (204) a user selection indicating a subset of recipes that correspond to a current cooking ability of the user; determining (206), for each recipe in the subset, at least one of: a cooking time difficulty indicator, a food ingredient difficulty indicator, and a recipe step difficulty indicator; determining (208), for each recipe in the subset, a recipe difficulty index based on at least one of: the cooking time difficulty indicator of the respective recipe, the food ingredient difficulty indicator of the respective recipe, and the recipe step difficulty indicator of the respective recipe; and determining (210) the cooking ability index of the user based on the recipe difficulty indexes of the subset of recipes.

Fig. 2

**Description**

FIELD OF THE INVENTION

The present disclosure relates to an apparatus and method for determining a cooking ability index of a user in the context of a given recipe database, the cooking ability index being indicative of a level of cooking ability of the user.

BACKGROUND OF THE INVENTION

It has become more and more common for consumers to prepare homemade food with the assistance of a recipe database. In fact, many manufacturers of kitchen appliances provide recipes that can be used with the kitchen appliances, so that users can be provided with guidance on how to cook certain dishes using the kitchen appliances. For example, a recipe database can be provided on the website of the manufacturer. Rather than presenting all the available recipes at an interface, typically these type of databases provide certain functions which enable users to search and choose recipes according to a certain model of the kitchen appliance being used. For example, functions like recipe nutrition calculation, recipe similarity comparison, recipe conversion between different appliance models, and recipe automatic generation can be provided at these databases.

SUMMARY OF THE INVENTION

When searching for recipes at a recipe database, most consumers tend to prefer recipes that have a similarity difficulty level with that of the recipes they can cook well. Consequently, in order to maximize user-friendliness and achieve satisfactory cooking results, it would be useful to provide suitable functionalities to allow users to effectively search and retrieve recipes from a recipe database that match their cooking experience and/or cooking ability. However, currently available solutions for providing recommended recipes to users (e.g. searchable recipe databases) do not take into account a current cooking ability of a user in recipe recommendation. Therefore, users cannot easily and intuitively obtain recipes that are suitable for their individual cooking abilities. Even though some recipe databases may contain difficulty ratings for recipes to indicate the difficulty of each recipe, such ratings are usually subjective and they are not considered to be universally applicable to all of the users. It would therefore be advantageous to provide an improved method for determining a cooking ability index of a user, so that suitable recipes can be acquired for the user according to this cooking ability index.

To better address one or more of the concerns mentioned earlier, in a first aspect, a computer-implemented method for determining a cooking ability index of a user is provided. The method comprises: acquiring a plurality of recipes, wherein each of the plurality of recipes comprises information associated with: a total cooking time, one or more food ingredients, and one or more recipe steps; receiving a user selection indicating a subset of recipes among the acquired plurality of recipes, wherein the subset of recipes includes one or more recipes that correspond to a current cooking ability of the user; determining, for each recipe in the subset, at least one of: a cooking time difficulty indicator, a food ingredient difficulty indicator, and a recipe step difficulty indicator, wherein the cooking time difficulty indicator, the food ingredient difficulty indicator, and the recipe step difficulty indicator are respectively indicative of a relative level of difficulty associated with the total cooking time, the one or more food ingredients, and the recipe steps of the respective recipe among the acquired plurality of recipes; determining, for each recipe in the subset, a recipe difficulty index based on at least one of: the cooking time difficulty indicator of the respective recipe, the food ingredient difficulty indicator of the respective recipe, and the recipe step difficulty indicator of the respective recipe; and determining the cooking ability index of the user based on the recipe difficulty indexes of the subset of recipes.

In some embodiments, determining the cooking ability index may comprise: calculating an average value of the recipe difficulty indexes of the recipes in the subset; and assigning the calculated average value as the cooking ability index.

In some embodiments, determining the cooking ability index may comprise: determining the value range of recipe difficulty indexes of the recipes in the subset; and assigning the value range as the cooking ability index.

In some embodiments, the method may further comprise performing the following steps for at least one of the recipes not in the user-selected subset of recipes: determining, for the respective recipe, at least one of: a cooking time difficulty indicator, a food ingredient difficulty indicator, and a recipe step difficulty indicator; and determining the recipe difficulty index for the respective recipe based on at least one of: the cooking time difficulty indicator of the respective recipe, the food ingredient difficulty indicator of the respective recipe, and the recipe step difficulty indicator of the respective recipe.

In some embodiments, the method may further comprise: retrieving one or more recipes from the plurality of recipes that correspond to the determined cooking ability index; outputting the retrieved one or more recipes that correspond to the determined cooking ability index.

In some embodiments, at least one of the retrieved recipes may not be in the user-selected subset of recipes.

In some embodiments, each of the acquired plurality of recipes may further comprise information associated with an active preparation time, the active preparation time being an amount of time required to prepare the one or more food ingredients in the respective recipe. In these embodiments, determining the cooking time difficulty indicator for a recipe may be based on the probability that both the total cooking time of the respective recipe and the active preparation time of the respective recipe are respectively shorter than the total cooking time and the active preparation time of a given one of the other recipes in the acquired plurality of recipes.

In some embodiments, determining the food ingredient difficulty indicator for a recipe may comprise: determining, for each of the one or more food ingredients of the respective recipe, a negative logarithm of the probability that the food ingredient is in a given one of the acquired plurality of recipes; and determining the food ingredient difficulty index based on the probability that the summation of negative logarithmic probabilities of each of the one or more food ingredients of the respective recipe is smaller than that of a given one of the other recipes in the acquired plurality of recipes.

In some embodiments, each of the plurality of recipes may further comprise information associated with one or more active preparation recipe steps, wherein an active preparation recipe step requires action by a user to prepare the one or more food ingredients in the respective recipe. In these embodiments, determining the recipe step difficulty indicator for a recipe may be based on the probability that both the total number of recipe steps of the respective recipe and the number of active preparation recipe steps of the respective recipe are respectively shorter than the total number of recipe steps and the number of active preparation recipe steps of a given one of the other recipes in the acquired plurality of recipes.

In a second aspect, a computer program product comprising a computer readable medium is provided. The computer readable medium has computer readable code embodied therein, and the computer readable code is configured such that, on execution by a suitable computer or processor, the computer or processor is caused to perform the method as described herein.

In a third aspect, an apparatus for determining a cooking ability index of a user is provided. The apparatus comprises a processor configured to: acquire a plurality of recipes, wherein each of the plurality of recipes comprises information associated with: a total cooking time, one or more food ingredients, and one or more recipe steps; receive a user selection indicating a subset of recipes among the acquired plurality of recipes, wherein the subset of recipes includes one or more recipes that correspond to a current cooking ability of the user; determine, for each recipe in the subset, at least one of: a cooking time difficulty indicator, a food ingredient difficulty indicator, and a recipe step difficulty indicator, wherein the cooking time difficulty indicator, the food ingredient difficulty indicator, and the recipe step difficulty indicator are respectively indicative of a relative level of difficulty associated with the total cooking time, the one or more food ingredients, and the recipe steps of the respective recipe among the acquired plurality of recipes; determine, for each recipe in the subset, a recipe difficulty index based on at least one of: the cooking time difficulty indicator of the respective recipe, the food ingredient difficulty indicator of the respective recipe, and the recipe step difficulty indicator of the respective recipe; and determine the cooking ability index of the user based on the recipe difficulty indexes of the subset of recipes.

According to the aspects and embodiments described above, the limitations of existing techniques are addressed. In particular, the above-described aspects and embodiments enable a cooking ability index of a user to be determined so that that suitable recipes can be acquired for the user according to this cooking ability index. To achieve this, the embodiments described above offer a standardized way to determine a degree of difficulty of a recipe which can be applied to all the recipes in a recipe database. In this way, once the cooking ability index of the user is determined, recipes having similar values with the cooking ability index of the user can be obtained and recommended to the user.

There is thus provided an improved method and apparatus for determining a cooking ability index of a user. These and other aspects of the disclosure will be apparent from and elucidated with reference to the embodiment(s) described hereinafter.

BRIEF DESCRIPTION OF THE DRAWINGS

For a better understanding of the embodiments, and to show more clearly how they may be carried into effect, reference will now be made, by way of example only, to the accompanying drawings, in which:

Fig. 1 is a block diagram of an apparatus for determining a cooking ability index of a user according to an embodiment; and
Fig. 2 illustrates a method for determining a cooking ability index of a user according to an embodiment.

DETAILED DESCRIPTION OF EMBODIMENTS

As noted above, there is provided an improved apparatus and a method of operating the same which addresses the existing problems.

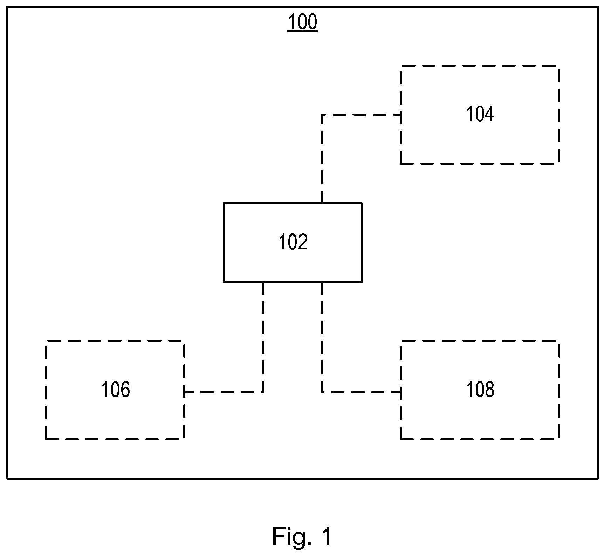

Fig. 1 shows a block diagram of an apparatus 100 according to an embodiment, which can be used for determining a cooking ability index of a user. Although the operation of the apparatus 100 is described below in the context of a single user, it will be appreciated that the apparatus 100 is capable of determining cooking ability indexes of a plurality of users.

As illustrated in Fig. 1, the apparatus comprises a processor 102 that controls the operation of the apparatus 100 and that can implement the method described herein. The processor 102 can comprise one or more processors, processing units, multi-core processor or modules that are configured or programmed to control the apparatus 100 in the manner described herein. In particular implementations, the processor 102 can comprise a plurality of software and/or hardware modules that are each configured to perform, or are for performing, individual or multiple steps of the method described herein.

Briefly, the processor 102 is configured to acquire a plurality of recipes and receive a user selection indicating a subset of recipes among the acquired plurality of recipes. Each of the acquired plurality of recipes comprises information associated with: a total cooking time, one or more food ingredients, and one or more recipe steps. The user-selected subset of recipes includes one or more recipes that correspond to a current cooking ability of the user. The processor 102 is configured to determine, for each recipe in the subset, at least one of: a cooking time difficulty indicator, a food ingredient difficulty indicator, and a recipe step difficulty indicator. The cooking time difficulty indicator, the food ingredient difficulty indicator, and the recipe step difficulty indicator are respectively indicative of a relative level of difficulty associated with the total cooking time, the one or more food ingredients, and the recipe steps of the respective recipe among the acquired plurality of recipes.

The processor 102 is further configured to determine, for each recipe in the subset, a recipe difficulty index based on at least one of: the cooking time difficulty indicator of the respective recipe, the food ingredient difficulty indicator of the respective recipe, and the recipe step difficulty indicator of the respective recipe. Subsequently, the processor 102 can then determine the cooking ability index of the user based on the recipe difficulty indexes of the subset of recipes.

In some embodiments, the apparatus 100 may further comprise at least one user interface 104. Alternative or in addition, at least one user interface 104 may be external to (i.e. separate to or remote from) the apparatus 100. For example, at least one user interface 104 may be part of another device. A user interface 104 may be for use in providing a user of the apparatus 100 with information resulting from the method described herein. Alternatively or in addition, a user interface 104 may be configured to receive a user input. For example, a user interface 104 may allow a user of the apparatus 100 to manually enter instructions, data, or information. In these embodiments, the processor 102 maybe configured to acquire the user input from one or more user interfaces 104.

A user interface 104 maybe any user interface that enables the rendering (or output or display) of information to a user of the apparatus 100. Alternatively or in addition, a user interface 104 may be any user interface that enables a user of the apparatus 100 to provide a user input, interact with and/or control the apparatus 100. For example, the user interface 104 may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, the apparatus 100 may comprise a memory 106. Alternatively or in addition, one or more memories 106 may be external to (i.e. separate to or remote from) the apparatus 100. For example, one or more memories 106 maybe part of another device. A memory 106 can be configured to store program code that can be executed by the processor 102 to perform the method described herein. A memory can be used to store information, data, signals and measurements acquired or made by the processor 102 of the apparatus 100. For example, a memory 106 maybe used to store (for example, in a local file) a plurality of recipes and/or the received user-selected subset of recipes. The processor 102 may be configured to control a memory 106 to store the plurality of recipes and/or the received user-selected subset of recipes.

In some embodiments, the apparatus 100 may comprise a communications interface (or circuitry) 108 for enabling the apparatus 100 to communicate with any interfaces, memories and/or devices that are internal or external to the apparatus 100. The communications interface 108 may communicate with any interfaces, memories and/or devices wirelessly or via a wired connection. For example, the communications interface 108 may communicate with one or more user interfaces 104 wirelessly or via a wired connection. Similarly, the communications interface 108 may communicate with the one or more memories 106 wirelessly or via a wired connection.

It will be appreciated that Fig. 1 only shows the components required to illustrate an aspect of the apparatus 100 and, in a practical implementation, the apparatus 100 may comprise alternative or additional components to those shown.

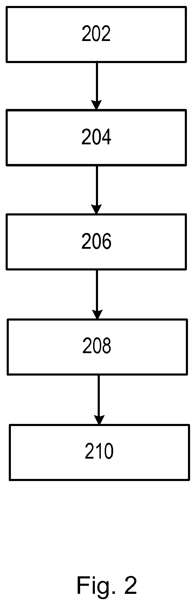

Fig. 2 illustrates a computer-implemented method for determining a cooking ability index of a user according to an embodiment. The illustrated method can generally be performed by or under the control of processor 102 of the apparatus 100.

With reference to Fig. 2, at block 202, a plurality of recipes are acquired. More specifically, a plurality of recipes may be acquired by the processor 102 of the apparatus 100. In some embodiments, the plurality of recipes may be stored at the memory 106 of the apparatus 100. Each of the plurality of recipes acquired at block 202 comprises information associated with: a total cooking time, one or more food ingredients, and one or more recipe steps.

In some embodiments, each of the plurality of recipes acquired at block 202 may further comprise information associated with an active preparation time. The active preparation time of a recipe is an amount of time required to prepare the one or more food ingredients in the respective recipe. The active preparation time of a recipe may be a proportion of the total cooking time of the recipe.

In some embodiments, each of the plurality of recipes acquired at block 202 may further comprise information associated with one or more active preparation recipe steps. An active preparation recipe step requires action by a user to prepare the one or more food ingredients in the respective recipe (e.g. "Chop two onions into small cubes"). An active preparation step of a recipe may be one of the recipes steps of the recipe.

Returning to Fig. 2, at block 204, a user selection indicating a subset of recipes among the acquired plurality of recipes is received. More specifically, this user selection may be received by the processor 102 of the apparatus 100. The user-selected subset of recipes includes one or more recipes that correspond to a current cooking ability of the user, and the subset can be considered as a benchmark of the current cooking ability of the user. In some embodiments, the user-selected subset of recipes may be received via the user interface 104 of the apparatus 100. For example, names (and/or representative images) of the plurality of recipes acquire at block 202 may be displayed at the user interface 104 and the user can select one or more recipes via a touch screen of the user interface 104.

Returning to Fig. 2, at block 206, at least one of: a cooking time difficulty indicator, a food ingredient difficulty indicator, and a recipe step difficulty indicator is determined for each of the recipe in the subset as indicated by the user selection received at block 204. More specifically, at least one of these difficulty indicators may be determined by the processor 102 of the apparatus 100. The cooking time difficulty indicator, the food ingredient difficulty indicator, and the recipe step difficulty indicator are respectively indicative of a relative level of difficulty associated with the total cooking time, the one or more food ingredients, and the recipe steps of the respective recipe among the acquired plurality of recipes. Examples of how each of the cooking time difficulty indicator, the food ingredient difficulty indicator, and the recipe step difficulty indicator can be determined are provided below.

**Example of cooking time difficult indicator determination**

As explained above, in some embodiments each of the plurality of recipes acquired at block 202 may further comprise information associated with an active preparation time. In these embodiments, determining the cooking time difficulty indicator for a recipe at block 206 may be based on the probability that both the total cooking time of the respective recipe and the active preparation time of the respective recipe are respectively shorter than the total cooking time and the active preparation time of a given one of the other recipes in the plurality of recipes acquired at block 202.

In these embodiments, since the cooking time difficulty indicator maybe determined based on a probability value, the cooking time difficulty indicator maybe expressed as a numerical value between 0 and 1. In more detail, the determination of the cooking time difficulty indicator $I_c$ for a recipe may be expressed using the formula below. In this formula, $t$ represents the total cooking time of a given recipe and $s$ represents the active preparation time of a given recipe.

$$I_c(t,s) = \frac{\#\{r \mid recipe\ r's\ total\ cooking\ time \leq t, \&\ active\ preparation\ time \leq s\}}{\#recipes\ acquired}$$

**Example of food ingredient difficulty indicator determination**

In some embodiments, determining the food ingredient difficulty indicator for a recipe at block 206 may comprise: determining, for each of the one or more food ingredients of the respective recipe, a negative logarithm of the probability that the food ingredient is in a given one of the plurality of recipes acquired at block 202, and determining the food ingredient difficulty index based on the probability that the summation of negative logarithmic probabilities of each of the one or more food ingredients of the respective recipe is smaller than that of a given one of the other recipes in the plurality of recipes acquired at block 202.

In more detail, in these embodiments the food ingredient difficulty indicator of a recipe may be determined based on the arability of the one or more food ingredients in the recipe. The availability of a food ingredient $i$ is related to the probability that it is in a given one of the plurality of recipes acquired at block 202. This probability $P(i)$ may be expressed using the formula below:

$$P(i) = \frac{\#\{r \mid i \ in \ recipe \ r\}}{\#recipes \ acquired}$$

The difficulty of a food ingredient can be regarded to be inversely related to the availability of the food ingredient. Therefore, a difficulty score of a food ingredient ay be expressed using the formula below:

$$Difficulty \ score = -\log(P(i)) \geq 0$$

The food ingredient difficulty score *diff(r)* can then be expressed using the formula below:

$$diff(r) = \sum_{i \ in \ r} -\log(P(i))$$

Subsequently, the food ingredient difficulty index $I_f$ can be determined by scaling the food ingredient difficulty score using probability, as represented by the formula below:

$$I_f = \frac{\#\{r' \mid diff(r') \leq diff(r)\}}{\#recipes \ acquired}$$

In these embodiments, since the food ingredient difficulty indicator $I_f$ may be determined based on a probability value, the food ingredient difficulty indicator $I_f$ may be expressed as a numerical value between 0 and 1.

**Example of recipe step difficulty indicator determination**

As explained above, in some embodiments each of the plurality of recipes acquired at block 202 may further comprise information associated with one or more active preparation recipe steps. In these embodiments, determining the recipe step difficulty indicator for a recipe may be based on the probability that both the total number of recipe steps of the respective recipe and the number of active preparation recipe steps of the respective recipe are respectively shorter than the number of recipe step and the number of active preparation recipe steps of a given one of the other recipes in the plurality of recipes acquired at block 202. In more detail, in some embodiments the recipe step difficulty index $I_r$ for a recipe *r* can be determined using the formula below.

$$I_r = \frac{\#\{r \mid number \ of \ recipe \ steps \ in \ r \leq u, \& \ active \ preparation \ recipe \ steps \ \leq v\}}{\#recipes \ acquired}$$

In this formula, u represents the total number of recipes steps of a given recipe and v represents the number of active preparation recipe steps of a given recipe. In these embodiments, since the recipe step difficulty index $I_r$ maybe determined based on a probability value, the recipe step difficulty index $I_r$ may be expressed as a numerical value between 0 and 1.

Returning to Fig. 2, at block 208, a recipe difficulty index is determined for each recipe in the subset as indicated by the user selection received at block 204. More specifically, the recipe difficulty index for each recipe may be determined by the processor 102 of the apparatus 100. In this step, the determination of a recipe difficulty index of a recipe is based on at least one of the difficulty indicators determined at block 206, i.e. at least one of the cooking time difficulty indicator of the respective recipe, the food ingredient difficulty indicator of the respective recipe, and the recipe step difficulty indicator of the respective recipe.

In some embodiments, the recipe difficulty index may be a summation of the cooking time difficulty indicator, the food ingredient difficulty indicator, and the recipe step difficulty indicator. This is represented by the formula below:

$$recipe \ difficulty \ index = \ I_c + I_f + I_r$$

As mentioned above, in some embodiments, each of the cooking time difficulty indicator, the food ingredient difficulty indicator, and the recipe step difficulty indicator can be expressed as a numerical value between 0 and 1. Therefore, in this case, the recipe difficulty index may be expressed as a numerical value between 0 and 3. It will be appreciated in other embodiments the recipe difficulty index of a recipe may have a different numerical range, or may be determined in a different way based on at least one of the cooking time difficulty indicator of the respective recipe, the food ingredient difficulty indicator of the respective recipe, and the recipe step difficulty indicator of the respective recipe. For example, in another embodiment the recipe difficulty index of a recipe may be determined as an average value between the cooking time difficulty indicator of the respective recipe, the food ingredient difficulty indicator of the respective recipe, and the recipe step difficulty indicator of the respective recipe.

Returning to Fig. 2, at block 210, the cooking ability index of the user is determined based on the recipe difficulty indexes of the subset of recipes as determined at block 208. More specifically, the cooking ability index of the user may be determined by the processor 102 of the apparatus 100. In some embodiments, determining the cooking ability index of the user at block 210 may comprise calculating an average value of the recipe difficulty indexes of the recipes in the subset, and assigning the calculated average value as the cooking ability index of the user.

In alternative embodiments, determining the cooking ability index of the user at block 210 may comprise determining the value range of recipe difficulty indexes of the recipes in the subset, and assigning the value range as the cooking ability index of the user. For example, the lowest recipe difficulty index amongst the determined recipe difficulty indexes of the subset may be adopted as the lower limit of the value range, and the highest recipe difficulty index amongst the determined recipe difficulty indexes of the subset maybe adopted as the higher limit of the value range.

Although not shown in Fig. 2, in some embodiments the method may further comprise performing, for at least one of the recipes not in the user-selected subset of recipes: determining, for the respective recipe, at least one of: a cooking time difficulty indicator, a food ingredient difficulty indicator, and a recipe step difficulty indicator, and subsequently determining the recipe difficulty index for the respective recipe based on at least one of: the cooking time difficulty indicator of the respective recipe, the food ingredient difficulty indicator of the respective recipe, and the recipe step difficulty indicator of the respective recipe.

In these embodiments, the method may further comprise retrieving one or more recipes from the acquired plurality of recipes that correspond to the cooking ability index of the user determined at block 210, and outputting the retrieved one or more recipes that corresponds to the cooking ability index of the user determined at block 210. For example, one or more recipes having recipe difficulty indexes within a predetermined deviation of the determined cooking ability index of the user may be retrieved by the processor 102.

As a more specific example, the cooking ability index of the user determined at block 210 maybe 1.75. In this case, the processor 102 maybe configured to retrieve recipes having recipe difficulty indexes within a deviation range of $\pm 0.25$ as recipes that correspond to the cooking ability index of the user. Therefore, in this specific example, recipes among the plurality of recipes acquired at block 202 having a recipe difficulty index within the range of 1.5-2 (or alternatively, having a recipe difficulty index smaller than or equal to the upper limit of this range, i.e. smaller than or equal to 2) can be retrieved and outputted by the processor 102. It will be appreciated that $\pm 0.25$ is only used herein as an exemplary value for illustrating the embodiment, and that in other embodiments the predetermined deviation may have a different value.

As another example, the cooking ability index of the user determined at block 210 may have a value range of 1.25-1.5. In this case, the processor 102 may be configured to retrieve recipes having recipe difficulty indexes within this particular range. Alternatively, the processor 102 may be configured to retrieve recipes having recipe difficulty indexes smaller than or equal to the upper limit of the value range, i.e. smaller than or equal to 1.5.

Moreover, in some of these embodiments, at least one of the retrieved recipes that correspond to the cooking ability index of the user is not in the user-selected subset of recipes. Therefore, in these embodiments, it is ensured that new recipes can be potentially retrieved and suggested to the user based on their current cooking ability.

There is thus provided an improved method and apparatus for determining a cooking ability index of a user, which overcomes the existing problems.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program maybe in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method for determining a cooking ability index of a user, the cooking ability index being indicative of a level of cooking ability of the user, the method comprising:

   acquiring (202) a plurality of recipes, wherein each of the plurality of recipes comprises information associated with: a total cooking time, one or more food ingredients, and one or more recipe steps;
   receiving (204) a user selection indicating a subset of recipes among the acquired plurality of recipes, wherein the subset of recipes includes one or more recipes that correspond to a current cooking ability of the user;
   determining (206), for each recipe in the subset, at least one of: a cooking time difficulty indicator, a food ingredient difficulty indicator, and a recipe step difficulty indicator, wherein the cooking time difficulty indicator, the food ingredient difficulty indicator, and the recipe step difficulty indicator are respectively indicative of a relative level of difficulty associated with the total cooking time, the one or more food ingredients, and the recipe steps of the respective recipe among the acquired plurality of recipes;
   determining (208), for each recipe in the subset, a recipe difficulty index based on at least one of: the cooking time difficulty indicator of the respective recipe, the food ingredient difficulty indicator of the respective recipe, and the recipe step difficulty indicator of the respective recipe; and
   determining (210) the cooking ability index of the user based on the recipe difficulty indexes of the subset of recipes.

2. The computer-implemented method according to claim 1, wherein determining (210) the cooking ability index comprises:

   calculating an average value of the recipe difficulty indexes of the recipes in the subset; and
   assigning the calculated average value as the cooking ability index.

3. The computer-implemented method according to claim 1, wherein determining (210) the cooking ability index comprises:

   determining the value range of recipe difficulty indexes of the recipes in the subset; and

assigning the value range as the cooking ability index.

4. The computer-implemented method according to any one of the preceding claims, further comprising performing the following steps for at least one of the recipes not in the user-selected subset of recipes:

   determining, for the respective recipe, at least one of: a cooking time difficulty indicator, a food ingredient difficulty indicator, and a recipe step difficulty indicator; and
   determining the recipe difficulty index for the respective recipe based on at least one of: the cooking time difficulty indicator of the respective recipe, the food ingredient difficulty indicator of the respective recipe, and the recipe step difficulty indicator of the respective recipe.

5. The computer-implemented method according to claim 4, further comprising:

   retrieving one or more recipes from the plurality of recipes that correspond to the determined cooking ability index; and
   outputting the retrieved one or more recipes that correspond to the determined cooking ability index.

6. The computer-implemented method according to claim 5, wherein at least one of the retrieved recipes is not in the user-selected subset of recipes.

7. The computer-implemented method according to any one of the preceding claims, wherein each of the acquired plurality of recipes further comprises information associated with an active preparation time, the active preparation time being an amount of time required to prepare the one or more food ingredients in the respective recipe, and wherein determining the cooking time difficulty indicator for a recipe is based on the probability that both the total cooking time of the respective recipe and the active preparation time of the respective recipe are respectively shorter than the total cooking time and the active preparation time of a given one of the other recipes in the acquired plurality of recipes.

8. The computer-implemented method according to any one of the preceding claims, wherein determining the food ingredient difficulty indicator for a recipe comprises:

   determining for each of the one or more food ingredients of the respective recipe, a negative logarithm of the probability that the food ingredient is in a given one of the acquired plurality of recipes; and
   determining the food ingredient difficulty index based on the probability that the summation of negative logarithmic probabilities of each of the one or more food ingredients of the respective recipe is smaller than that of a given one of the other recipes in the acquired plurality of recipes.

9. The computer-implemented method according to any one of the preceding claims, wherein each of the plurality of recipes further comprises information associated with one or more active preparation recipe steps, wherein an active preparation recipe step requires action by a user to prepare the one or more food ingredients in the respective recipe, and
   wherein determining the recipe step difficulty indicator for a recipe is based on the probability that both the total number of recipe steps of the respective recipe and the number of active preparation recipe steps of the respective recipe are respectively shorter than the total number of recipe steps and the number of active preparation recipe steps of a given one of the other recipes in the acquired plurality of recipes.

10. A computer program product comprising a computer readable medium, the computer readable medium having computer readable code embodied therein, the computer readable code being configured such that, on execution by a suitable computer or processor, the computer or processor is caused to perform the method as claimed in any one of the preceding claims.

11. An apparatus (100) for determining a cooking ability index of a user, the apparatus comprising a processor (102) configured to:

   acquire a plurality of recipes, wherein each of the plurality of recipes comprises information associated with: a total cooking time, one or more food ingredients, and one or more recipe steps;
   receive a user selection indicating a subset of recipes among the acquired plurality of recipes, wherein the subset of recipes includes one or more recipes that correspond to a current cooking ability of the user;

determine, for each recipe in the subset, at least one of: a cooking time difficulty indicator, a food ingredient difficulty indicator, and a recipe step difficulty indicator, wherein the cooking time difficulty indicator, the food ingredient difficulty indicator, and the recipe step difficulty indicator are respectively indicative of a relative level of difficulty associated with the total cooking time, the one or more food ingredients, and the recipe steps of the respective recipe among the acquired plurality of recipes;

determine, for each recipe in the subset, a recipe difficulty index based on at least one of: the cooking time difficulty indicator of the respective recipe, the food ingredient difficulty indicator of the respective recipe, and the recipe step difficulty indicator of the respective recipe; and

determine the cooking ability index of the user based on the recipe difficulty indexes of the subset of recipes.

Fig. 1

Fig. 2

Europäisches
Patentamt

European
Patent Office

Office européen
des brevets

# EUROPEAN SEARCH REPORT

Application Number

EP 19 18 0731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 489 377 B1 (FELLER DAVID B [US] ET AL) 8 November 2016 (2016-11-08) <br> * column 1, line 50 - column 2, line 25; figures 1-5 * <br> * column 3, line 20 - column 15, line 9 * <br> ----- | 1-11 | INV. <br> G06Q10/06 <br> G06Q50/12 |
| X | CN 109 408 732 A (ZHUHAI UNICOOK TECH CO LTD) 1 March 2019 (2019-03-01) <br> * the whole document * <br> ----- | 1-11 | |
| X | WO 2014/199584 A1 (PANASONIC IP CORP AMERICA [US]) 18 December 2014 (2014-12-18) <br> * paragraph [0007] * <br> * paragraph [0040] * <br> * paragraph [0263] - paragraph [0269] * <br> ----- | 1-11 | |
| X | US 2016/103834 A1 (ALTAF FAHEEM [US] ET AL) 14 April 2016 (2016-04-14) <br> * abstract; figures 1-7 * <br> ----- | 1-11 | |

TECHNICAL FIELDS
SEARCHED (IPC)

G06Q

The present search report has been drawn up for all claims

| Place of search | Date of completion of the search | Examiner |
|---|---|---|
| Munich | 23 September 2019 | Lopes Margarido, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 0731

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2019

| Patent document cited in search report | | Publication date | Patent family member(s) | | Publication date |
|---|---|---|---|---|---|
| US 9489377 | B1 | 08-11-2016 | US<br>US | 9489377 B1<br>9639805 B1 | 08-11-2016<br>02-05-2017 |
| CN 109408732 | A | 01-03-2019 | NONE | | |
| WO 2014199584 | A1 | 18-12-2014 | NONE | | |
| US 2016103834 | A1 | 14-04-2016 | US<br>US | 2016103834 A1<br>2016103839 A1 | 14-04-2016<br>14-04-2016 |

EPO FORM P0459

For more details about this annex : see Official Journal of the European Patent Office, No. 12/82